# EUROPÄISCHE PATENTANMELDUNG

(11) **EP 2 026 103 A1**
(43) Veröffentlichungstag der Anmeldung: **18.02.2009**
(21) Anmeldenummer: 08104971.0
(22) Anmeldetag: 06.08.2008
(51) Int. Cl.: G01S 17/58, G08G 1/01

(54) **Verfahren zur Geschwindigkeitsmessung von Fahrzeugen mittels Laserscanner**

(30) Priorität: 10.08.2007 DE 102007038364
(71) Anmelder: ROBOT Visual Systems GmbH, 40789 Monheim (DE)
(72) Erfinder: Lehning, Michael, 31137 Hildesheim (DE)
(74) Vertreter: Schaller, Renate

(57) **Zusammenfassung**

Die Erfindung betrifft ein Verfahren zur Geschwindigkeitsmessung von Fahrzeugen 5 mittels eines Laserscanners 1, indem von einem Straßenrand ausgehend ein Arbeitsbereich 3 oberhalb der Straße in mehreren Scans horizontal abgescannt wird und in diesem Arbeitsbereich 3 auf der Straße fahrende Fahrzeuge 5 mehrfach über Messpunkte erfasst werden, die jeweils durch ein Messdatenpaar beschrieben sind. In den Messdaten wird nach den Messdatenpaaren gesucht, die gemeinsam näherungsweise einen rechten Winkel beschreiben. Zur weiteren Datenverarbeitung werden die rechten Winkel durch Modelldaten ersetzt und aus der Ortsveränderung der Modelldaten über die Scans die Geschwindigkeit eines zugeordneten Fahrzeuges 5 bestimmt.

## Beschreibung

Die Erfindung betrifft ein Verfahren zur Geschwindigkeitsmessung von Fahrzeugen, wie es gattungsgemäß aus der Patentschrift EP 1 466 311 B1 bekannt ist.

In der Patentschrift EP 1 466 311 B1 ist ein Verfahren beschrieben, in dem ein am Straßenrand stationierter Sensor eine gepulste Laserstrahlung über einen vorgegebenen Winkelbereich (fächerartiger Arbeitsbereich) horizontal über die Fahrbahn scannt.
Der Arbeitsbereich wird auf der gegenüberliegenden Straßenseite durch Gebäude, Bäume, parkende Fahrzeuge und dergleichen begrenzt, die einen statischen Hintergrund bilden, der vom Sensor über eine Vielzahl von Messpunkten metrisch erfasst wird. Ebenfalls wird ein sich auf der Straße im Arbeitsbereich frei bewegendes Objekt, z. B. ein Lastwagen, durch eine Vielzahl von Messpunkten metrisch erfasst.

Die Messpunkte werden durch eine Entfernung und einen Winkel in einem Polarkoordinatensystem beschrieben, in dem der Laserscanner den Koordinatenursprung darstellt, und bilden Rohdaten, die kontinuierlich erfasst und einer Recheneinheit zugeführt werden. Die Recheneinheit erkennt durch statistische Messmethoden die Rohdaten, die dem statischen Hindergrund zuzuordnen sind und verwendet diese als Referenzdaten.
Weicht ein Rohdatenpaar von dieser Referenz ab, so wird es von der Datenmenge des statischen Hindergrundes selektiert und zur weiteren Auswertung gekennzeichnet.
Die selektierten Rohdatenpaare werden als Objektdaten bezeichnet und durch bekannte Algorithmen einem oder mehreren Clustern und damit Objekten zugeordnet.
Es erfolgt dann eine Datenreduktion und aus der verbleibenden reduzierten Objektdatenmenge wird eine Objektdarstellung gebildet, aus der es möglich ist, die geometrischen Eigenschaften des Objektes zu ermitteln.

Eine Datenreduktion erst nach der Zuordnung der Rohdaten zu Hintergrunddaten bzw. Objektdaten und der Clusterzuordnung der Objektdaten als auch die Objektdarstellung aus realen Objektdaten wurde im Einspruchsverfahren gegen das EP 1 466 311 B1 durch die Patentinhaberin als erfindungswesentlich gegenüber dem Stand der Technik betont.

Durch die Bildung der Objektdarstellungen aus realen Objektdaten würden z. B. im Vergleich zur Patentanmeldung W0 03/019234 A1, bei der die Objektdatenmenge zur Bildung der Objektdarstellungen und Datenreduktion kriterienabhängig durch ausgewählte Daten (Modelldaten) ersetzt werden, keine die komplexe Geometrie des Objektes widerspiegelnden Objektdaten verloren gehen.

Durch die späte Datenreduktion erst nach der Clusterzuordnung würden möglichst wenige relevante Informationen bezüglich Form und Verhalten verloren gehen.

Das Verfahren erfordert einen hohen Rechen- und Speicheraufwand und stellt dementsprechend hohe Anforderungen an die Hardware.

Die bereits erwähnte Patentanmeldung W0 03/019234 A1 betrifft ebenfalls ein Verfahren zur Erkennung und Verfolgung von Objekten mittels Laserscanner.

Die jeweils einem Objekt durch Clusterbildung (hier Segmente genannt) zuzuordnenden Objektdaten werden hier durch eine Objektbox als statische Eigenschaft ersetzt. Diese Objektbox entspricht hinsichtlich Form und Größe dem durch das Objekt dargestellten Gegenstand und wird nicht durch reale Objektdaten sondern durch Modelldaten beschrieben.

Die dynamischen Eigenschaften eines Objektes - im Wesentlichen die Bewegungsgeschwindigkeit und Bewegungsrichtung - sind über die Position des Objektes, die sich in den einzelnen Scans für relativ bewegte Objekte ändert, an Hand der Koordinaten eines Bezugspunktes der Objektbox bestimmbar.

Bei dem Bezugspunkt der Objektbox kann es sich um einen beliebigen Punkt handeln, dessen Position relativ zu der Objektbox für die Dauer des Verfahrens festgelegt ist. Insbesondere wird der geometrische Schwerpunkt der Objektbox als Bezugspunkt vorgeschlagen.
Die Bestimmung der Position des Objektes anhand eines solchen Bezugspunktes unterliegt einer geringeren Schwankungsbreite und kommt daher der relativen Bewegungsbahn des Objektes näher, als wenn die Position des Objektes z. B. aus dem geometrischen Schwerpunkt realer Objektdaten ermittelt wird, die in Anzahl und Betrag über die Scans schwanken.

Wie erläutert, werden die real erfassten Objektdaten durch Modelldaten ersetzt, was zum einen eine Datenreduktion bewirkt und zum anderen eine weitgehende Vereinfachung der geometrischen Eigenschaften darstellt und so im Vergleich zur Lösung der Patentschrift EP 1 466 311 B1 nur noch stark eingeschränkt Informationen zu den Objekteigenschaften vorhanden sind.

Dies muss jedoch dann kein Nachteil sein, wenn für die Anwendung dieser beschränkte Informationsgehalt ausreichend ist, was bei einem Abstandssensor z. B. gemäß der Patentanmeldung WO 03/019234 A1 der Fall ist. Er erfüllt seine Aufgabe, wenn er die ein Fahrzeug umgebenden Objekte mit ihrer Position und ihrer relativen Geschwindigkeit erfasst.

Ein zweiter Unterschied ergibt sich für die Patentanmeldung WO 03/019234 A1 gegenüber der Patentschrift EP 1 466 311 B1 dadurch, dass keine Unterteilung in Hintergrunddaten und Objektdaten erfolgt, sondern alle Rohdaten Objektdaten sind.

Dies ergibt sich aus dem unterschiedlichen Verwendungszweck der beiden Verfahren.
In der Patentanmeldung WO 03/019234 A1 ist der Laserscanner dazu vorgesehen, an einem fahrenden Fahrzeug montiert zu werden, um als Abstandssensor zu wirken, weshalb alle Rohdaten, die der Laserscanner erfasst, als Objektdaten verarbeitet werden. Alle Objekte, egal ob es sich um absolut bewegende oder nicht bewegende Objekte im Arbeitsbereich des Sensors handelt, haben zum Sensor eine relative Geschwindigkeit, sind daher zu beachtende Objekte und werden mit ihrer Position und ihrer relativen Geschwindigkeit zum Sensor erfasst. Es besteht somit kein Bedarf einer Datenselektierung.

Der Erfindung liegt die Aufgabe zu Grunde, ein Verfahren zur Geschwindigkeitsmessung von Fahrzeugen zu schaffen, das gegenüber dem Stand der Technik einen geringeren Rechen- und Speicheraufwand erfordert, um damit die Anforderungen an eine hierzu erforderliche Hardware zu verringern, womit eine geeignete Hardware kostengünstiger und energieeffizienter umgesetzt werden kann.

Diese Aufgabe wird durch ein Verfahren mit den Merkmalen des Anspruches 1 gelöst.
Vorteilhafte Weiterbildungen sind in den Unteransprüchen beschrieben.

Anhand der Zeichnung wird das Verfahren im Folgenden beispielhaft näher erläutert.
Es zeigen:
- Fig. 1: den Arbeitsbereich eines bestimmungsgemäß positionierten Laserscanners
- Fig. 2: eine schematische Darstellung eines den Arbeitsbereich durchfahrenden Fahrzeuges zu verschiedenen Zeitpunkten

Gleich den beiden im Stand der Technik beschriebenen Verfahren beruht ein hier beschriebenes Verfahren auf dem Prinzip der Impulslaufzeitmessung von Laserimpulsen zum angemessenen Objekt und zurück. Die zeitliche Differenz zwischen dem Aussenden eines Laserimpulses und dem Eintreffen des zurück reflektierten Strahlungsanteils korreliert mit der Wegstrecke, die der Laserimpuls zurückgelegt hat.

Indem der Laserimpuls (Messstrahlung) z. B. über einen rotierenden Spiegel oder einen Schwingspiegel abgelenkt wird, scannt er kontinuierlich fächerartig einen Arbeitsbereich 3 ab.
Gleich einem Laserscanner 1 gemäß der EP 1 466 311 B1 ist dieser ortsfest aufgestellt und der Arbeitsbereich 3 damit im Raum statisch unverändert.
Der Arbeitsbereich 3 ist grundsätzlich bestimmt durch den Aufstellort des Laserscanners 1, den Scanwinkelbereich, die Ausrichtung der Mittelachse 4 des Scanwinkelbereiches und die Reichweite der Laserimpulse.
Es ist dem Fachmann klar, dass unter der Reichweite die Entfernung verstanden wird, aus der eine reflektierte Messstrahlung noch oberhalb der Empfindlichkeitsgrenze des Laserscanners 1 detektiert wird.

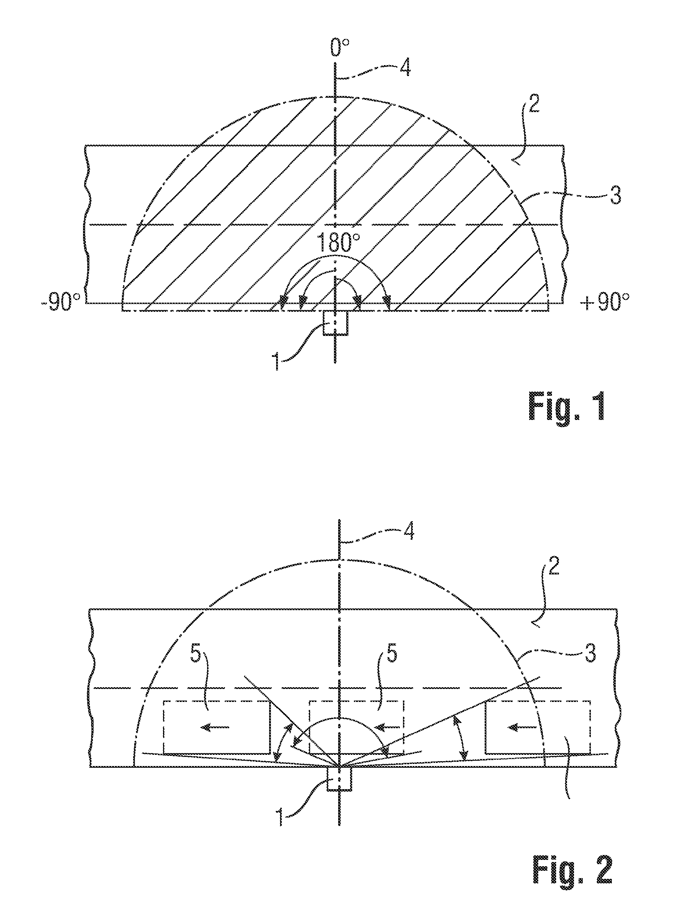

Zur Durchführung des Verfahrens wird, wie in Fig. 1 dargestellt, ein Laserscanner 1 am Straßenrand in einer Entfernung von ca. 1 bis 3 m aufgestellt und so zur Fahrbahn 2 ausgerichtet, dass er die Fahrbahn 2 über einen Scanwinkelbereich von z. B. 180° in einer Höhe von ca. 55 cm (+/- 10 cm) horizontal abscannt. Vorteilhaft werden die Laserimpulsfrequenz und die Scanfrequenz so aufeinander abgestimmt, dass der Winkelabstand der Entfernungswerte konstant 1° ist, also pro Scan 181 Entfernungswerte bestimmt werden.

Zum einfachen Verständnis der Erfindung soll der Scanwinkelbereich durch einen positiven und einen negativen Scanwinkelbereich beschrieben werden, ausgehend von einer den Scanwinkelbereich halbierenden Mittelachse 4.
Bei einem Scanwinkelbereich von 180° bewirkt demnach ein in den Arbeitsbereich 3 einfahrendes Fahrzeug 5, d. h. ein sich gegenüber der Mittelachse 4 näherndes Fahrzeug 5, Messpunkte, beginnend unter einem Scanwinkel von +90° bis hin zu 0°. Anschließend bewirkt das sich gegenüber der Mittelachse 4 entfernende Fahrzeug 5 Messpunkte beginnend unter einem Scanwinkel von 0° bis hin zu -90°.

Bei jedem einzelnen Scan werden die sich im Arbeitsbereich 3 befindenden Objekte über eine Vielzahl von Messpunkten erfasst, die jeweils durch ein Messdatenpaar, gebildet aus einem Entfernungswert und einem Winkelwert, beschrieben werden.

Dabei kann der Winkelwert durch die beschriebene Winkeldarstellung oder auch durch eine Winkeldarstellung von 0 bis 180° gebildet werden.

Alle Messpunkte, die über jeweils einen Scan erfasst werden, bilden jeweils eine Sequenz von Messdatenpaaren, die eine Momentaufnahme des Arbeitsbereiches 3 darstellt.

Im Arbeitsbereich 3 befinden sich grundsätzlich sowohl statische Objekte, was in der Regel die gegenüberliegende Straßenseite begrenzende Gebäude, Bäume oder parkende Fahrzeuge sind, die gemeinsam einen statischen Hintergrund bilden, als auch dynamische Objekte, insbesondere fahrende Fahrzeuge. Ebenso ist es auch möglich, dass der Laserscanner 1 kein Ziel im Messbereich findet. Diese Ziele werden intern als "unendlich" entfernt markiert, indem den betreffenden Winkelwerten die maximal messbare Entfernung zugeordnet wird.

Gemäß dem Verwendungszweck des Verfahrens, die Geschwindigkeit von Fahrzeugen zu erfassen, sind für die Messdatenverarbeitung grundsätzlich nur die Messdaten von Bedeutung, die einem dynamischen Objekt zugeordnet werden können.

Eine Selektierung der Messdaten der dynamischen Objekte aus der Gesamtmenge aller Messdaten ist jedoch im Unterschied zu einem Verfahren nach dem Patent EP 1 466 311 B1 nicht erforderlich. Es erfolgt auch keine Clusterbildung.

Stattdessen wird jeweils in einer Sequenz von Messdaten, d. h. in allen Messdaten pro Scan, nach den Messdatenpaaren gesucht, die gemeinsam ein Streckenpaar beschreiben, bei dem die Strecken einen rechten Winkel miteinander einschließen (nachfolgend auch rechter Winkel genannt).

Wie schematisch in Fig. 2 gezeigt, ist ein solches Streckenpaar ein geeignetes Modell, um Fahrzeuge 5, unabhängig vom Fahrzeugtyp, im Arbeitsbereich 3 zu finden.

Das Fahrzeug 5 reflektiert die Messstrahlung über die gesamte Durchfahrt durch den Arbeitsbereich 3 mit seiner dem Laserscanner 1 zugewanden Fahrzeugseite. Die von diesen Messpunkten erhaltenen Messdaten bilden einen näherungsweise geradlinigen Verlauf, durch den über mathematische Approximationsverfahren eine erste Schätzgerade gelegt wird. Durch die Messdaten des ersten und letzten Messpunktes der Fahrzeugseite wird die erste Schätzgerade auf eine erste Strecke bestimmter Länge begrenzt.

Neben diesen Messdaten, die die Fahrzeugseite jeweils während eines Scans liefert, werden über die Durchfahrt zusätzlich Messdaten erst von der Fahrzeugfront und dann vom Fahrzeugheck generiert. Auch diese Messdaten bilden näherungsweise einen geradlinigen Verlauf, der durch eine zweite Schätzgerade angenähert wird. Durch die Messdaten des ersten und letzten Messpunktes der Fahrzeugfront bzw. des Fahrzeughecks wird die zweite Schätzgerade auf eine zweite Strecke bestimmter Länge begrenzt.

Die Anzahl der von der Fahrzeugfront oder dem Fahrzeugheck erhaltenen Messdaten hängt im Wesentlichen neben den Reflexionseigenschaften der Oberfläche und der Entfernung des Fahrzeuges 5 zum Laserscanner 1 vom überstrichenen Winkelbereich der Front bzw. des Hecks und dem Auftreffwinkel des Laserscanners 1 auf dem Heck bzw. der Front ab. Die Wahrscheinlichkeit einen Messwert zu erhalten ist umso höher, je näher sich das Fahrzeug 5 am Laserscanner 1 befindet und umso steiler der Strahl auf dessen Oberfläche trifft. Dies bedeutet, dass die Front- und Heckflächen weit entfernt vom Laserscanner 1 (außerhalb des Messbereichs) und in der Nähe des 0°-Bereichs (flacher Auftreffwinkel und kleiner Winkelbereich) nur wenige bis gar keine Messwerte liefern.

Das heißt, ein den Arbeitsbereich 3 durchfahrendes Fahrzeug 5 liefert im positiven Scanbereich Messdaten, die näherungsweise zuerst einen ersten rechten Winkel darstellen, beim Überfahren der Mittelachse 4 durch die Fahrzeugfront geht der Winkel in eine Strecke über, die dann beim Überfahren der Mittelachse 4 durch das Fahrzeugheck im negativen Scanbereich in einen zweiten rechten Winkel übergeht, der gegenüber der Mittelachse 4 spiegelverkehrt zum ersten rechten Winkel erscheint.
Da sowohl beim Überfahren der Mittelachse 4 als auch in einem von der Geschwindigkeit und der Länge des Fahrzeuges 5 abhängigen Winkelbereich um die Mittelachse 4 herum nur die Fahrzeugseite vom Laserscanner 1 erfasst wird, kann aus diesen Daten kein rechter Winkel ermittelt werden.
Es ist daher vorteilhaft, von den im Arbeitsbereich 3 erhaltenen Messdaten nur die zur weiteren Auswertung heranzuziehen, die aus Winkelbereichen stammen, in denen rechte Winkel, verursacht durch Fahrzeuge, erwartet werden können, beispielsweise in den interessierenden Winkelbereichen von 0° bis 45° und 135° bis 180° bzw. -90° bis -45° und +45° bis +90°. Das heißt, nicht der gesamte Arbeitsbereich 3 dient als Messbereich, sondern dieser wird auf die interessierenden Winkelbereiche beschränkt. Dies bedeutet, dass bereits unmittelbar nach Erhalt der Messdaten eine Datenreduktion um die Messdaten erfolgen kann, die außerhalb dieser interessierenden Winkelbereiche, nämlich gemäß diesem Beispiel im Bereich von > 45° bis < 135° bzw. von > -45° bis < +45° erfasst wurden.

Alternativ kann ein Laserscanner 1, der beide der interessierenden Winkelbereiche abscannt, durch zwei Laserscanner 1 ersetzt werden, die jeweils einen interessierenden Winkelbereich von beispielsweise 45° scannen. Die beiden Laserscanner 1 sind dann so anzuordnen und deren Daten sind so zu kombinieren, dass sie sinngemäß die gleiche Anordnung und die gleichen Scanbereiche bilden, wie der Laserscanner 1, der auf die Bereiche 0° bis 45° und 135° bis 180° bzw. -90° bis -45° und +45° bis +90° beschränkt ist. Besonders vorteilhaft bei dem Einsatz von zwei 45° Laserscannern 1 ist, dass die beiden Laserscanner 1 bei gleicher Scanfrequenz die Winkelbereiche doppelt so häufig überstreichen und somit die doppelte Anzahl von Sequenzen von Messdatenpaaren gewonnen wird.

Die mit jedem Scan gelieferte Sequenz von Messdaten, bestehend aus Entfernungs- und Winkelwerten, wird in kartesische Koordinaten umgerechnet, die sich auf ein durch den Laserscanner 1 bestimmtes Koordinatensystem beziehen. Der Laserscanner 1 bildet den Koordinatenursprung, wobei die Y-Achse durch die Mittelachse 4 beschrieben wird.
Vorteilhaft wird der Laserscanner 1 so zur Fahrbahn 2 ausgerichtet, dass die Mittelachse 4 senkrecht zur Fahrtrichtung ausgerichtet ist, wodurch die X-Achse und die Fahrtrichtung zusammenfallen.

Mit bekannten Algorithmen lassen sich dann von jedem Scan unter Vorgabe einer bestimmten Toleranzbreite (Güte) alle auf einem rechten Winkel liegenden Messpunkte bestimmen.
Wie bereits erläutert, sollen als rechter Winkel im Sinne dieser Beschreibung zwei Strecken verstanden werden, die senkrecht aufeinander treffen. Die Güte wird z. B. aus dem Querabstand der Messwerte zur Schätzgeraden und ihrem Abstand zueinander abgeleitet.

Messdaten, die keinem solchen rechten Winkel zugeordnet werden können, werden nicht weiter gebraucht, so dass eine Datenreduktion um diese Messdaten erfolgen kann.

Die einen solchen rechten Winkel bildenden Messdaten werden nun durch eine Modellbeschreibung ersetzt, die den rechten Winkel mit seinen Schenkellängen (Länge der beiden Strecken) und dessen Position im Arbeitsbereich 3 bestimmt.
Die Modelldaten für diese Modellbeschreibung können z. B. die Koordinaten des Scheitelpunktes und die Koordinaten der freien Endpunkte der beiden Strecken sein oder die Koordinaten des Scheitelpunktes, die Längen der beiden Strecken und der Winkel, den eine der beiden Strecken mit der Mittelachse 4 einschließt. In jedem Fall schließen die Modelldaten die Koordinaten des Scheitelpunktes ein. Die Datenmenge für die Modellbeschreibung ist nur ein Bruchteil der Datenmenge der realen Messdaten, die dem rechten Winkel zugeordnet wurden.

Die Modelldaten der in jedem Scan gefundenen rechten Winkel werden in einen Zwischenspeicher eingetragen. Um die Geschwindigkeit für ein angemessenes Fahrzeug 5 zu ermitteln, werden die Modelldaten der einzelnen Scans, die jeweils zu demselben rechten Winkel gehören, zu einer Gruppe zusammengefasst und aus der Ortsänderung der Scheitelpunkte eine Bahnkurve bestimmt. Zu einer Gruppe gehörig können alle die rechten Winkel gezählt werden, deren Scheitelpunkte gemeinsam eine gleichförmige Bewegung beschreiben.

Alle Modelldaten, die keiner Gruppe zugeordnet werden können, werden hauptsächlich als durch den statischen Hintergrund gebildet verstanden und können gelöscht werden .

Aus der Ortsänderung des Scheitelpunktes, genauer deren mittleren Ortsänderung und der Scangeschwindigkeit, lässt sich die Geschwindigkeit des betreffenden Fahrzeuges 5 errechnen, welches durch die Modelldaten dieser Gruppe beschrieben wird. Ebenso lässt sich aus der mittleren Abweichung von der durchschnittlichen Ortsänderung ein Gütemaß für die Geschwindigkeitsermittlung ableiten.

An dieser Stelle liegt also eine Geschwindigkeit vor und eine Bahnkurve für einen rechten Winkel. Über die Lage der Bahnkurve kann auf die Lage der verschiedenen Fahrspuren einer mehrspurigen Straße geschlossen werden, auf der sich das Fahrzeug 5 durch den Arbeitsbereich 3 bewegt.

Um ein erfindungsgemäßes Verfahren zur statistischen Erfassung des Verkehrsflusses und der Verkehrsdichte zu verwenden, kann mit diesen vorliegenden Daten eine Geschwindigkeit und eine Fahrspur, einem Zeitpunkt zugeordnet, abgespeichert werden.

Um Geschwindigkeitsverstöße zu ahnden, wird beim Erreichen eines Fotopunktes bzw. einer Detektionslinie die errechnete Geschwindigkeit mit einer vorgegebenen Höchstgeschwindigkeit verglichen und im Fall der Überschreitung der vorgegebenen Höchstgeschwindigkeit eine fotographische Aufnahme ausgelöst, in welche alle rechtserheblichen Daten nach Abschluss der erfolgreichen Messung eingeblendet werden.

Wie bereits erläutert, liefert ein den Arbeitsbereich 3 durchfahrendes Fahrzeug 5 nicht durchgehend Messdaten, die einen rechten Winkel beschreiben.
Unter Umständen reicht die Winkelgruppe, die für ein Fahrzeug 5 im positiven Scanbereich gebildet wurde, nicht aus, um eine Geschwindigkeit sicher errechnen zu können, weshalb es von Interesse sein kann, auch die Winkelgruppe, die für das gleiche Fahrzeug 5 im negativen Scanbereich gebildet wurde, für die Berechnung der Geschwindigkeit heranziehen zu können.
Eine Korrelation zwischen den beiden Winkelgruppen wird in Kenntnis der Fahrzeuglänge, bestimmt durch die Streckenlänge des die Fahrzeugseite verkörpernden Schenkels des rechten Winkels mit klassischen Methoden der Bewegungsschätzung und Regressionsrechnung hergestellt.

Die Kenntnis der Fahrzeuglänge hat darüber hinaus den Vorteil, dass über die Fahrzeuglänge eine Klassifikation der Fahrzeuge 5 erfolgen kann.

Dies kann von Interesse sein, um z. B. die Geschwindigkeiten unterschiedlicher Fahrzeugklassen wie Pkw und Lastwagen mit unterschiedlichen Höchstgeschwindigkeiten zu vergleichen, oder aber Zweiradfahrzeuge zu erkennen, um diese zusätzlich zum Frontfoto mit einem Heckfoto zu erfassen oder anstelle eines Frontfotos nur ein Heckfoto auszulösen.

Neben einer Beschränkung des maximalen Messbereiches, bestimmt durch den Arbeitsbereich 3 des Laserscanners 1, auf bestimmte interessierende Winkelbereiche, wie bereits erläutert, ist es vorteilhaft, den Messbereich in seiner Tiefe zu begrenzen.
D. h., die Messdatenerfassung wird nicht durch die Reichweite des Laserscanners 1 beschränkt, sondern durch Entfernungsgrenzen, die dem Laserscanner 1 spezifisch für den Aufstellort angelernt werden.
Zu diesem Zweck wird vor Beginn der eigentlichen Messung der Arbeitsbereich 3 durch den Laserscanner 1 abgescannt und bewegte Objekte (Fahrzeuge) ohne Beschränkung des Arbeitsbereiches 3 gesucht. Aus den so ermittelten Abständen der Fahrzeuge 5 vom Laserscanner 1 kann der Entfernungsbereich ermittelt werden, in dem Fahrzeuge erwartet werden und der Messbereich auf diesen Entfernungsbereich eingeschränkt werden. Darüber hinaus können in einem statistischen Verfahren Hypothesen über die Spurmitten der beobachteten Fahrspuren abgeleitet werden. Mittels der Hypothesen kann der Messbereich hinsichtlich einer Minimal- und Maximalgrenzentfernung weiter auf einzelne Fahrspuren eingeschränkt werden. Alle vom Laserscanner 1 gelieferten Entfernungswerte werden dann nur noch hinsichtlich dieses ermittelten interessierenden Entfernungsbereiches betrachtet. Vorteilhaft ist dabei die Beschränkung auf Entfernungen quer zur eigentlichen Fahrtrichtung, d. h. es wird nicht die absolute Entfernung zum Fahrzeug 5 in die Statistik aufgenommen, sondern nur der Querabstand zum Fahrzeug 5.
Eingehende Messdaten werden dann zunächst geprüft, ob sie jeweils innerhalb oder außerhalb eines interessierenden Entfernungsbereiches liegen. Solche die außerhalb liegen, werden dann nicht der Recheneinheit zugeführt.

Vorteilhaft wird der maximale Messbereich bestimmt durch den Arbeitsbereich 3 des Laserscanners 1 auf interessierende Winkelbereiche und interessierende Entfernungsbereiche beschränkt. Damit kann ein zu einer Fahrbahn 2 gehörendes Messfeld, das jeweils einer Detektionslinie zugeordnet werden kann, gebildet werden.

Mit dieser Einschränkung des Messbereiches innerhalb des Arbeitsbereiches 3 wird die Datenerfassung vorteilhaft frühzeitig um solche Daten reduziert, die für die Messung nicht von Interesse sind.
Eine weitere Datenreduktion erfolgt zwangsläufig durch eine Weiterverarbeitung nur solcher Messdatenpaare, die an der Bildung von rechten Winkeln teilnehmen und bei Ersatz dieser Messdatenpaare durch Modelldaten.

Sowohl die erfindungsgemäß sich zwingend ergebende Datenreduktion als auch die sich vorteilhaft ergebende Datenreduktion führen zu einer Verkürzung der Rechenzeit und Verringerung der notwendigen Speicherkapazitäten.

Bezugszeichenliste
- 1: Laserscanner
- 2: Fahrbahn
- 3: Arbeitsbereich
- 4: Mittelachse
- 5: Fahrzeug

## Patentansprüche

1. Verfahren zur Geschwindigkeitsmessung von Fahrzeugen (5) mittels Laserscanner (1), indem von einem Straßenrand ausgehend ein Arbeitsbereich (3) oberhalb der Straße in mehreren Scans horizontal abgescannt wird und in diesem Arbeitsbereich (3), der einen maximalen Messbereich bestimmt, auf der Straße fahrende Fahrzeuge (5) mehrfach über Messpunkte erfasst werden, die jeweils durch ein Messdatenpaar beschrieben sind, gebildet durch einen Entfernungswert und einen Winkelwert und diese Messdaten einer Recheneinheit zugeführt werden, **dadurch gekennzeichnet,**
**dass** in den Messdaten, die in jedem einzelnen Scan gewonnen werden, nach solchen gesucht wird, die ein senkrecht aufeinander stehendes Streckenpaar, das heißt einen rechten Winkel, beschreiben,
**dass** diese Messdaten durch Modelldaten, die auch die Koordinaten eines Scheitelpunktes umfassen, ersetzt werden und in einem Zwischenspeicher abgelegt werden,
**dass** die Modelldaten der einzelnen Scans, die jeweils denselben rechten Winkel ersetzen, zu einer Gruppe zusammengefasst werden und aus der Ortsänderung der Koordinaten der Scheitelpunkte der Modelldaten einer Gruppe und der Scangeschwindigkeit die Geschwindigkeit eines zugeordneten Fahrzeuges (5) bestimmt wird.

2. Verfahren nach Anspruch 1, **dadurch gekennzeichnet,**
**dass** zur frühzeitigen Datenreduktion der Messbereich auf interessierende Winkelbereiche beschränkt wird, in denen Messdaten, die einen rechten Winkel bilden, erwartungsgemäß erfasst werden.

3. Verfahren nach Anspruch 1, **dadurch gekennzeichnet,**
**dass** zur frühzeitigen Datenreduktion der Messbereich auf einen interessierenden Entfernungsbereich beschränkt wird, in dem Fahrzeuge (5) erwartungsgemäß erfasst werden.

4. Verfahren nach Anspruch 3, **dadurch gekennzeichnet,**
**dass** der interessierende Entfernungsbereich auf nur eine oder auf eine Auswahl von Fahrspur/en beschränkt wird/werden.

5. Verfahren nach einem der Ansprüche 1 - 4, **dadurch gekennzeichnet,**
**dass** der Arbeitsbereich (3) durch eine Mittelachse (4) halbiert wird, und der Laserscanner (1) so zur Fahrbahn (2) ausgerichtet wird, dass die Mittelachse (4) senkrecht zur Fahrtrichtung verläuft.

6. Verfahren nach einem der Ansprüche, 1 - 5, **dadurch gekennzeichnet,**
**dass** die Modelldaten aus den Koordinaten des Scheitelpunktes und die Koordinaten der freien Endpunkte der beiden Strecken gebildet werden.

7. Verfahren nach Anspruch 5, **dadurch gekennzeichnet,**
**dass** die Modelldaten aus den Koordinaten des Scheitelpunktes, den Längen der beiden Strecken und dem Winkel, den eine der beiden Strecken mit der Mittelachse (4) einschließt, gebildet werden.

8. Verfahren nach einem der Ansprüche 6 oder 7, **dadurch gekennzeichnet,**
**dass** aus den Modelldaten auf die Fahrzeuglänge geschlossen wird, um die Fahrzeuge (5) zu klassifizieren.

9. Verfahren nach Anspruch 8, dass die bestimmte Geschwindigkeit mit einer dem klassifizierten Fahrzeug (5) zugeordneten Höchstgeschwindigkeit verglichen wird und bei Überschreitung der Höchstgeschwindigkeit in Abhängigkeit von der Fahrzeugklasse ein Front- und/oder Heckfoto ausgelöst wird.
